(19) Europäisches Patentamt
European Patent Office
Office européen des brevets

(11) **EP 0 909 579 A1**

(12) **EUROPEAN PATENT APPLICATION**

(43) Date of publication:
21.04.1999 Bulletin 1999/16

(51) Int Cl.⁶: **B01D 53/94**

(21) Application number: 98308386.6

(22) Date of filing: 14.10.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 15.10.1997 JP 281777/97
10.09.1998 JP 256625/98

(71) Applicant: **NGK INSULATORS, LTD.**
**Nagoya City Aichi Pref. (JP)**

(72) Inventors:
• **Takahashi, Akira**
  **Ann Arbor, MI 48105 (US)**
• **Tomita, Toshihiro, Maison-Torisu 503**
  **Nagoya-City, Aichi-Prefecture 457-0006 (JP)**
• **Hiramatsu, Takuya, NGK Yagoto-ryo 150**
  **Nagoya-City, Aichi-Prefecture 468-0069 (JP)**
• **Suzuki, Kenji, NGK Yagoto-ryo 150**
  **Nagoya-City, Aichi-Prefecture 468-0069 (JP)**

(74) Representative: **Paget, Hugh Charles Edward et al**
  **MEWBURN ELLIS**
  **York House**
  **23 Kingsway**
  **London WC2B 6HP (GB)**

(54) **Adsorbent material or adsorbent comprising porous material for automobile exhaust gas purification**

(57) An adsorbent material for automobile exhaust gas purification, comprising at least two kinds of porous materials each containing a large number of pores and having a hydrocarbon adsorption capability. The porous materials comprise at least a porous material having pores of 0.3 to 0.5 nm in diameter and a porous material having pores of larger than 0.5 nm in diameter. The weight ratio (Ma/Mb) of the weight [Ma (g)] of the porous material having pores of 0.3 to 0.5 nm in diameter and the weight [Mb (g)] of the porous material having pores of larger than 0.5 nm in diameter and the weight ratio (Md/Mc) of the weight [Md (g)] of hydrocarbons having five or more carbon atoms and the weight [Mc (g)] of hydrocarbons having four or less carbon atoms, all the hydrocarbons being present in the exhaust gas generated during the cold start of an automobile engine, satisfy the formula :

$$0.5 \le (Ma/Mb) \times (Md/Mc) \le 3.$$

The above adsorbent material can adsorb and desorb a variety of hydrocarbons of various molecular weights including hydrocarbons having four or less carbon atoms and, when used in an automobile engine together with a catalyst, enables effective adsorption and purification of the hydrocarbons emitted from the engine.

## Description

Background of the Invention

(1) Field of the Invention

The present invention relates to an adsorbent material or adsorbent for automobile exhaust gas purification, capable of effectively purifying the harmful substances present in the exhaust gas emitted from an automobile engine, particularly the hydrocarbons, etc. generated in a large amount during the cold start of the engine; a system for automobile exhaust gas purification using the adsorbent material or adsorbent; and a method for automobile exhaust gas purification using the system.

(2) Description of the Related Art

Active researches and developments have heretofore been made on systems for exhaust gas purification, used for purifying the harmful substances present in exhaust gas from automobile engine, such as nitrogen oxide (NOx), carbon monoxide (CO), hydrocarbons (hereinafter referred to as "HC") and the like. In recent years, as the regulation on exhaust gas has become stricter, the purification of HC during engine start (hereinafter referred to as "during the cold start") has become an important technical task.

The reason is as follows. During the cold start, as compared with the period of continuous operation of engine, a large amount of HC is discharged from the engine; meanwhile, the catalyst disposed in the exhaust pipe of engine does not reach its activation temperature and has a low purifiability. As a result, the HC discharged during the cold start occupies a large proportion of the total harmful substances discharged from the engine.

As one means for achieving the above-mentioned technical task, there was proposed a system for exhaust gas purification disposed in the exhaust pipe of automobile engine, comprising not only a catalyst but also, as an adsorbent material, a porous material (e.g. a zeolite) having an adsorption capability for HC [e.g. Japanese Patent Application Kokai (Laid-Open) No. 75327/1990 and Japanese Patent Application Kokai (Laid-Open) No. 293519/1992].

This system can reduce the amount of HC discharged during the cold start, because the unburnt HC discharged in a large amount from an engine during the cold start can be adsorbed by a porous material (specifically, a zeolite having a high $SiO_2/Al_2O_3$ ratio, such as USY, ZSM-5, β-zeolite, mordenite or the like) temporarily until the catalyst is heated and reached its activation temperature.

In a system for exhaust gas purification using a porous material, such as mentioned above, the kinds of hydrocarbons adsorbed by the porous material differ depending upon the pore diameters of the porous material.

For example, zeolites such as USY, ZSM-5, β-zeolite and the like have pore diameters of larger than 0.5 nm because their pores are determined mainly by 10-membered ring or 12-membered ring. Therefore, when exposed to an atmosphere containing about 10% by volume of water vapor, such as the exhaust gas emitted from automobile engine, the zeolites are poisoned with water at the Al-containing adsorption sites and become unable to adsorb HC having four or less carbon atoms (the HC is hereinafter referred to as "HC of C4 or less").

Mordenite, which is also a zeolite, contains not only pores of 0.65x0.70 nm in diameter determined by 12-membered ring but also relatively small "pockets" of 0.26x0.57 nm in diameter (pockets refer to pocket-like pores which are not through-holes as seen in ordinary pores and which are closed at one end). Mordenite is unable to adsorb HC of C4 or less, either, because the pockets have a small depth of about 0.5 nm.

The unburnt HC discharged from an engine during the cold start, generally contains about 20 to 60% of HC of C4 or less. Therefore, with a porous material unable to effectively adsorb HC of C4 or less, the effective adsorption and purification of a variety of HCs having various molecular weights is impossible.

Summary of the Invention

In view of the above-mentioned problems of the prior art, the present invention aims at providing an adsorbent material or adsorbent for automobile exhaust gas purification, capable of effectively adsorbing and purifying a variety of hydrocarbons having various molecular weights, including HC of C4 or less; a system for automobile exhaust gas purification using the adsorbent material or adsorbent; and a method for automobile exhaust gas purification using the system.

According to the present invention, there is provided an adsorbent material for automobile exhaust gas purification, comprising at least one kind of porous material having a large number of pores and a hydrocarbon adsorption capability, wherein the porous material comprises at least a porous material having pores of 0.3 to 0.5 nm in diameter (the adsorbent material is hereinafter referred to as "adsorbent material I").

According to the present invention, there is also provided an adsorbent material for automobile exhaust gas purification, comprising at least two kinds of porous materials each having a large number of pores and a hydrocarbon adsorption capability, wherein the porous materials comprise at least a porous material having pores of 0.3 to 0.5 nm in diameter and a porous material having pores of larger than 0.5 nm in diameter (the adsorbent material is hereinafter referred to as "adsorbent material II").

In the adsorbent material II, it is preferable that (a) the weight ratio (Ma/Mb) of the weight [Ma (g)] of the porous material having pores of 0.3 to 0.5 nm in diameter and the weight [Mb (g)] of the porous material having pores of larger than 0.5 nm in diameter and (b) the weight ratio (Md/Mc) of the weight [Md (g)] of hydrocarbons having five or more carbon atoms and the weight [Mc (g)] of hydrocarbons having four or less carbon atoms, all the hydrocarbons being present in the exhaust gas generated during the cold start of an automobile engine, satisfy the following formula (1):

$$0.5 \leq (Ma/Mb) \times (Md/Mc) \leq 3 \qquad (1)$$

In the adsorbent material I or II of the present invention, each porous material having a hydrocarbon adsorption capability is preferably a zeolite; and the zeolite is preferably a silicate, an aluminosilicate or an aluminophosphate. The aluminosilicate has a $AiO_2/Al_2O_3$ ratio of preferably 10 or more, more preferably 50 or more, particularly preferably 100 or more.

The zeolite preferably has pores determined by 8-membered ring. Specifically, there can be preferably used a zeolite having a pore structure of chabazite type, deca-dodecasil 3R type, ferrierite type, erionite type or phillipsite type.

The zeolite preferably has at least one kind of noble metal loaded thereon, selected from Pt, Pd and Rh. The amount of the noble metal loaded is preferably 5 to 150 g/ft$^3$. Further, the zeolite preferably contains at least one kind of ion selected from the ions of the group IB elements, i.e. Cu, Ag and Au.

According to the present invention, there is also provided an adsorbent for automobile exhaust gas purification, comprising:

a carrier, and
an adsorbent layer containing the adsorbent material I or II, formed on the carrier.

In the above adsorbent, the carrier is preferably a monolithic carrier made of a heat-resistant inorganic material.

In the adsorbent, it is preferable that an adsorbent layer containing a porous material having pores of 0.3 to 0.5 nm in diameter and an adsorbent layer containing a porous material having pores of larger than 0.5 nm in diameter are formed on the carrier in an overlapping state; and it is more preferable that an adsorbent layer containing a porous material having pores of 0.3 to 0.5 nm in diameter is formed on the carrier and, on the adsorbent layer, is formed an adsorbent layer containing a porous material having pores of larger than 0.5 nm in diameter.

In the adsorbent, it is possible that an adsorbent layer containing a porous material having pores of 0.3 to 0.5 nm in diameter and an adsorbent layer containing a porous material having pores of larger than 0.5 nm in diameter are formed on the carrier in a divided state.

In the adsorbent, the monolithic carrier preferably has a blowing-through hole having a diameter larger than the diameters of the passages of the monolithic carrier; and the diameter of the blowing-through hole is preferably 10 to 50 mm.

In the adsorbent, it is preferable that a catalyst layer containing a catalyst component is formed on the adsorbent layer; and the catalyst component preferably comprises at least one kind of noble metal selected from Pt, Pd and Rh.

The noble metal is loaded in an amount of preferably 5 to 150 g/ft$^3$; and the noble metal may be loaded on a heat-resistant oxide and, in that state, be contained in the catalyst layer.

According to the present invention, there is also provided a system for automobile exhaust gas purification disposed in the exhaust pipe of an automobile engine, which comprises at least:

an adsorbent material having a hydrocarbon adsorption capability, and
a catalyst capable of purifying the hydrocarbons present in the exhaust gas emitted from the engine,

in which system the adsorbent material is the adsorbent material I or II or the adsorbent, all mentioned above.

In the system for automobile exhaust gas purification, the catalyst preferably contains, as the catalyst component, at least one kind of noble metal selected from Pt, Pd and Rh; the catalyst preferably comprises:

a monolithic carrier made of a heat-resistant inorganic material, and

a catalyst layer containing a catalyst component, formed on the carrier; and it is preferable that the adsorbent material I or II or the adsorbent is provided in an exhaust pipe at a position downstream in the flow direction of the exhaust gas and the catalyst of at least one kind is provided in an exhaust pipe at a position upstream in the flow direction of the exhaust gas.

In the system for automobile exhaust gas purification, when the adsorbent is an adsorbent comprising a carrier, an adsorbent layer containing a porous material having pores of 0.3 to 0.5 nm in diameter and an adsorbent layer containing a porous material having pores of larger than 0.5 nm in diameter, the two adsorbent layers being formed on the carrier in a divided state, it is preferable that the latter adsorbent layer is positioned on the carrier upstream in the flow direction of the exhaust gas and the former adsorbent layer is positioned on the carrier downstream in the flow direction of the exhaust gas.

In the system for automobile exhaust gas purification, at least one electrical heater is preferably provided in the exhaust pipe; and the exhaust pipe is preferably constituted as a single exhaust pipe having no bypass.

According to the present invention, there is also provided a method for automobile exhaust gas purification which comprises allowing an adsorbent material to adsorb the hydrocarbons present in the exhaust gas generated during the cold start of an automobile engine, allowing the adsorbent material to desorb the adsorbed hydrocarbons, with its temperature increase caused by the exhaust gas, and allowing a catalyst to purify the desorbed hydrocarbons, in which method hydrocarbons having four or less carbon atoms and/or hydrocarbons having five or more carbon atoms are purified by the use of the above-mentioned system for automobile exhaust gas purification.

In the system for automobile exhaust gas purification, it is preferable that the oxygen content in the exhaust gas is increased by introducing an oxidizing gas into the gas, or by controlling the ratio of the amount of air for fuel combustion and the amount of fuel during the operation of the automobile engine.

Brief Description of the Drawings

Fig. 1 is a schematic drawing of the apparatus used for measurement of adsorption capability of adsorbent samples.

Fig. 2 is a schematic drawing showing the constitution of the system for exhaust gas purification, used in Examples.

Detailed Description of the Invention

In the adsorbent material for automobile exhaust gas purification according to the present invention (the adsorbent material is hereinafter referred to as "the present adsorbent material"), there is (are) used, as the porous material having an HC adsorption capability, a porous material(s) having pores optimum for the hydrocarbons generated in an automobile engine, whereby the HC adsorption capability of the present adsorbent material is enhanced.

The present adsorbent material I has a feature in that the porous material having an HC adsorption capability comprises at least a porous material having pores of 0.3 to 0.5 nm in diameter.

Of the total hydrocarbons contained in the exhaust gas from engine, only C2 (C2 refers to two carbon atoms, the same applies hereinafter) to C4 HC molecules can enter the small adsorption sites of the above porous material.

In the above porous material, the pore diameters of the adsorption sites and the molecular diameters of C2 to C4 HC are nearly equal, and the pore walls and these HC molecules to be adsorbed are in close proximity to each other; therefore, they have a strong interaction with each other. As a result, the small molecules of C2 to C4 HC whose adsorption from the moisture-containing exhaust gas of engine has been difficult, can be very effectively adsorbed by the above porous material.

C4 or less HC is present in the exhaust gas emitted during the cold start, in a considerable amount and it is necessary to purify these HC components reliably in connection with the intensified regulation for exhaust gas. Of the C4 or less HC components, unsaturated HC molecules such as ethylene, propylene and the like have a high ability for ozone formation (ozone formation by automobile exhaust gas is one reason for automobile exhaust gas regulation) and therefore must be purified at the highest priority.

The present adsorbent material may comprise only one kind of porous material as in the case of the adsorbent material I; however, use of at least two kinds of porous materials in combination is more effective.

The present adsorbent material II has a feature in that it uses, in combination, a porous material having pores of 0.3 to 0.5 nm in diameter (such as used in the adsorbent material I) and a porous material having pores of larger than 0.5 nm in diameter.

The adsorbent material constituted as above can, by itself, adsorb simultaneously (a) HC of C4 or less whose adsorption has heretofore been impossible and (b) HC of C5 or more having relatively large molecular weights and occupying the major portion of the HC discharged during the cold start, such as toluene, xylene and the like.

If the porous material having pores of larger than 0.5 nm in diameter has pores larger than 10 nm in diameter, however, efficient HC adsorption by the present adsorbent material II may be impossible when the adsorbent material is used in, for example, the exhaust gas from automobile engine in which the concentration of HC to be adsorbed is as low as 1% or less.

In combining a porous material having pores of 0.3 to 0.5 nm in diameter and a porous material having pores of larger than 0.5 nm in diameter, it is preferred to determine the weight ratio of the two porous materials depending upon the composition of the exhaust gas to be treated, in order for the produced adsorbent material to have an appropriate adsorption capability for the exhaust gas.

From such a standpoint, in the present adsorbent material II, it is preferred that the weight ratio of the two porous materials used therein is determined depending upon the composition of the exhaust gas with which the adsorbent material is to be contacted, particularly the weight ratio (Md/Mc) of the weight [Md (g)] of the HC of C5 or more present in the exhaust gas emitted during the cold start and the weight [Mc (g)] of the HC of C4 or less also present in the exhaust gas emitted during the cold start.

It is preferred that (a) the weight ratio (Ma/Mb) of the weight [Ma (g)] of the porous material having pores of 0.3 to 0.5 nm in diameter and the weight [Mb (g)] of the porous material having pores of larger than 0.5 nm in diameter and (b) the weight ratio (Md/Mc) of the weight [Md (g)] of hydrocarbons having five or more carbon atoms and the weight [Mc (g)] of hydrocarbons having four or less carbon atoms, all the hydrocarbons being present in the exhaust gas generated during the cold start of an automobile engine, is specifically determined as as to satisfy the following formula (1):

$$0.5 \leq (Ma/Mb)x(Md/Mc) \leq 3 \tag{1}$$

An adsorbent material satisfying the above formula (1) can adsorb HC of C4 or less and HC of C5 or more, most efficiently. When the (Ma/Mb)x(Md/Mc) is smaller than 0.5, the presence of the adsorbent material in a small amount makes impossible the adsorption of HC of C4 or less; the presence of the adsorbent material in a large amount results in a large amount of the porous material having pores of larger than 0.5 nm in diameter (which does not participate in the adsorption of HC of C4 or less); thus, efficient use of the adsorbent material is impossible.

Meanwhile, when the (Ma/Mb)x(Md/Mc) is larger than 3, the presence of the adsorbent material in a small amount makes impossible the adsorption of HC of C5 or more; the presence of the adsorbent material in a large amount results in a large amount of the porous material having pores of 0.3 to 0.5 nm in diameter (which does not participate in the adsorption of HC of C5 or more); thus, efficient use of the adsorbent material is impossible.

The reason why the relation of the weight ratio of the two kinds of porous materials and the weight ratio of HC of C4 or less and HC of C5 or more was specified, is because any HC molecule is composed of only H and C and its weight determines its volume roughly while any zeolite having pore diameters of certain range has a particular pore volume and its weight determines its capacity for HC adsorption.

There is no particular restriction as to the kind of each porous material used, as long as it has an HC adsorption capability; however, a zeolite is preferred because it has excellent heat resistance, hydrothermal resistance and oxidation resistance.

In treating the exhaust gas discharged from an automobile engine, an adsorbent material is ordinarily disposed in the moisture-containing exhaust gas system of the engine; therefore, the adsorbent material must be resistant to at least 500°C. The adsorbent material must have oxidation resistance as well in the automobile exhaust gas because it contains NOx, $O_2$, etc.

Any of natural zeolites and synthetic zeolites can be used, and there is no particular restriction as to the kind of the zeolite used. However, a silicate, an aluminosilicate or an aluminophosphate is preferred because they have good heat resistance in the presence of water vapor. The aluminosilicate has a main framework structure composed of Al, Si and O alone. As the aluminophosphate, there can be mentioned, for example, SAPO, ALPO and MeAPO (Me = Mn, Cu, Co or the like).

The aluminosilicate has a $SiO_2/Al_2O_3$ ratio of preferably 10 or more, more preferably 50 or more, particularly preferably 100 or more, in view of the heat resistance, durability and hydrophobicity. A high $SiO_2/Al_2O_3$ ratio results in high hydrophobicity and enables selective HC adsorption even in the presence of water vapor.

The above mentioned pores of 0.3 to 0.5 nm in diameter are even smaller than those of zeolites having relatively small pores of about 0.5 to 0.6 nm in diameter, such as ZSM-5, β-zeolite and the like.

In the present invention, therefore, it is preferred to use, as the porous material having pores of 0.3 to 0.5 nm in diameter, a zeolite having pores determined by 8-membered ring and not a zeolite having pores determined by 10- or 12-membered ring, such as ZSM-5, β-zeolite or the like.

As the zeolite satisfying the above requirement, there can be mentioned, for example, zeolites having a pore structure of chabazite type, deca-dodecasil 3R type, ferrierite type, erionite type or phillipsite type.

These zeolites can be synthesized by, for example, the process described in "Separation of Permanent Gases on the All-Silica 8-Ring Clathrasil DD3R" M.J. den Exter, J.C. Jansen and H. van Bekkum, Studies in Surface Science and Catalysis, 84, 1159 (1994).

Incidentally, with a zeolite having pores of larger than 0.5 nm in diameter, as with conventional zeolites, HC of C4 or less are hardly adsorbed. Meanwhile, with a zeolite having pores of smaller than 0.3 nm in diameter, the pores are too small and HC molecules of C2 to C4 are unable to enter the pores and cannot be adsorbed.

By allowing the zeolite used as a porous material, to load at least one kind of noble metal selected from Pt, Pd and Rh, an adsorbent material ca be obtained which has not only an adsorption capability for HC but also a catalysis for exhaust gas purification (such an adsorbent material is hereinafter referred to as "adsorbent-catalyst material" in some cases). Of these noble metals, Pd of lowest cost and high regeneratability is particularly preferred.

Such a noble metal-loaded zeolite has an HC adsorption capability and a catalysis for exhaust gas; further can be regenerated without reducing its adsorption capability, after repeated use as an adsorbent material; furthermore can suppress coking which takes place simultaneously with HC adsorption. Therefore, it is not necessary to add, to the zeolite, a noble metal for coking suppression. Thus, the noble metal-loaded zeolite is very useful.

The loading of a noble metal on the zeolite is conducted preferably by ion exchange or impregnation in view of the thermal stability of the noble metal-loaded zeolite. The amount of the noble metal loaded is preferably 5 to 150 g per $ft^3$ of carrier in view of the cost of noble metal and the regeneratability of zeolite.

When the noble metal is loaded directly on the zeolite, it may happen that the noble metal causes cohesion in the zeolite and has insufficient durability as a catalyst. To prevent the cohesion, it is preferable to load the noble metal on a heat-resistant oxide and allow the resulting material to be contained in the zeolite. Thereby, the noble metal has high catalyst durability and shows a satisfactory purifiability even in the steady-state engine operation after cold start.

As the heat-resistant oxide for loading a noble metal thereon, there can be mentioned, for example, heat-resistant oxides such as $Al_2O_3$, $SiO_2$, $TiO_2$, $ZrO_2$ and the like, and compound oxides thereof. $Al_2O_3$ having a specific surface area of 100 $m^2$/g or more is particularly preferred because it can load a noble metal in a highly dispersed state and improvements in low-temperature light-off property and heat resistance are obtained.

It is preferable to allow the zeolite to contain at least one kind of ion selected from the ions of the group IB elements (Cu, Ag and Au) of periodic table, because the ion can increase the HC adsorption capability of zeolite. The content of the ion in zeolite is preferably 20% or more, more preferably 40% or more based on the Al atom of zeolite, because with a small content of the ion, the resulting increase in the HC adsorption capability of zeolite is small. The ion may be used in the zeolite in any desired combination with the above-mentioned noble metal.

At least one kind of ion selected from the ions of Mg, Ca, Sr, Ba, Y, La, Ti, Ce, Mn, Fe, Co, Cr, Ni and Zn, preferably at least one kind of ion selected from the ions of Mg, Ca, Fe and Cr can be added to the zeolite, in addition to the ion of the group IB element, because the addition can increase the heat resistance of zeolite.

The adsorbent material of the present invention may be used by itself, but is preferably used in the form of an adsorbent comprising:

a carrier, and
an adsorbent layer containing the present adsorbent material, formed on the carrier.

There is no particular restriction as to the kind of the carrier, and various kinds of carriers can be used such as pellets, beads, a ring, a monolithic carrier and the like. Preferably, the present adsorbent material is used in the form of an adsorbent obtained by loading, on a monolithic carrier, an adsorbent layer containing the present adsorbent material.

The monolithic carrier is generally called a honeycomb structure and refers to a structure having passages (cells) surrounded by substantially uniform partition walls. The monolithic carrier is preferably made of a heat-resistant inorganic material, specifically cordierite, mullite or ferrite type stainless steel in view of the heat resistance and thermal shock resistance.

In forming an adsorbent layer on the monolithic carrier, the adsorbent material in the adsorbent layer may as necessary contain 5 to 20% by weight of an inorganic binder such as $Al_2O_3$, $SiO_2$ or the like, because it enables the strong adhesion of the adsorbent material to the carrier without scarifying the HC adsorption capability of the adsorbent material.

When a plurality of porous materials different in HC adsorptivity are used in combination, these porous materials may be allowed to be present on the carrier in a mixed state; however, it is preferred to form a plurality of adsorbent layers each containing a different porous material, on the carrier in an overlapping state (the resulting adsorbent is hereinafter referred to as "multi-layered adsorbent"). For obtaining such a multi-layered adsorbent specifically, it is preferred to form, on the carrier, an adsorbent layer containing a porous material having pores of 0.3 to 0.5 nm in diameter and then forming, on the adsorbent layer, an adsorbent layer containing a porous material having pores of larger than 0.5 nm in diameter.

HC of C4 or less which has been adsorbed by an adsorbent layer, begins to be desorbed at low temperatures, as compared with HC of C5 or more. Therefore, excessive temperature increase of the adsorbent layer for HC of C4 or less must be suppressed. This suppression can be achieved by disposing an adsorbent layer containing a porous material of larger than 0.5 nm in pore diameter capable of adsorbing HC of C5 or more, as an outer adsorbent layer (a surface adsorbent layer) and an adsorbent layer containing a porous material of 0.3 to 0.5 nm in pore diameter capable of adsorbing HC of C4 or less, as an inner adsorbent layer not directly exposed to a high-temperature exhaust gas; and it becomes possible to adsorb HC of C4 or less for a relatively long time.

It is also preferred to obtain the present adsorbent in such a form that a plurality of adsorbent layers each containing a different porous material, for example, an adsorbent layer containing a porous material of 0.3 to 0.5 nm in pore diameter and an adsorbent layer containing a porous material of larger than 0.5 nm in diameter are formed on the carrier in a divided state. In constituting the present system for automobile exhaust gas purification using such an adsorbent, the adsorbent can be arranged in such a manner that the adsorbent layer containing a porous material of larger than 0.5 nm in pore diameter is, in the exhaust pipe of automobile engine, at a position upstream in the flow direction of the exhaust gas emitted from the engine (at such a position, the temperature of exhaust gas is relatively high); as a result, the adsorbent can show the same effects as mentioned above for the multi-layered adsorbent.

It is preferred to (1) allow the adsorbent to have a portion of low pressure loss by changing the length or porosity of part of the adsorbent or (2) form, in the adsorbent, a blowing-through hole having a diameter larger than the diameters of the passages (cells) of the monolithic carrier, to allow part of the exhaust gas to blow through the hole, because (1) or (2) accelerates the warm-up of the catalyst provided downstream of the adsorbent and enhances the efficiency of purification of the HC desorbed from the adsorbent.

The diameter of the blowing-through hole is preferably 50 mm or less in view of the strength of carrier; the diameter is more preferably 40 mm or less in order to suppress the reduction in amount of HC adsorbed, caused by blowing-through of excessive amount of exhaust gas. Conversely, when the diameter of the blowing-through hole is too small, the warm-up of the catalyst provided downstream of the adsorbent is insufficient. Therefore, the diameter is preferably 10 mm or more.

The present adsorbent may take a form wherein a catalyst layer containing a catalyst component is formed on an adsorbent layer formed on a monolithic carrier (such an adsorbent is hereinafter referred to as "adsorbent-catalyst" in some cases). In the adsorbent-catalyst, for the same reason as previously mentioned for the adsorbent-catalyst material, (1) the catalyst component preferably comprises at least one kind of noble metal selected from Pt, Pd and Rh, (2) the amount of the noble metal loaded is preferably 5 to 150 g/ft$^3$, and (3) the noble metal is contained in the catalyst layer preferably in the form of a noble metal loaded on a heat-resistant oxide.

Even when a noble metal-loaded catalyst component and a zeolite component are loaded on a monolithic carrier in a mixed state and not in an overlapping state, the adsorbent-catalyst functions relatively satisfactorily. In such an adsorbent-catalyst, the weight ratio of the zeolite component and the catalyst component is 50:50 to 85:15 and the zeolite component is contained preferably in a large proportion. The amounts of the zeolite component and the catalyst component both loaded on the monolithic carrier are preferably 0.05 to 0.40 g/cc (the zeolite component) and 0.02 to 0.20 g/cc (the catalyst component).

A system for automobile exhaust gas purification can be constituted by disposing, in the exhaust pipe of an automobile engine, at least:

an adsorbent material having a hydrocarbon adsorption capabilvity, and
a catalyst capable of purifying the hydrocarbons present in the exhaust gas emitted from the engine.

With such a system for automobile exhaust gas engine, the HC present in the exhaust gas generated during the cold start of the engine is adsorbed by the adsorbent material; the adsorbed HC is desorbed from the adsorbent with the temperature increase of the exhaust gas; and the desorbed HC is purified by the catalyst.

By using, in the above system for automobile exhaust gas purification, the present adsorbent material or adsorbent as the adsorbent material, HC, particularly HC of C4 or less can be effectively purified.

In the present system for automobile exhaust gas purification, it is sufficient that at least an adsorbent material having a hydrocarbon adsorption capability and a catalyst capable of purifying the hydrocarbons present in exhaust gas emitted from automobile engine are disposed in the exhaust pipe of automobile engine. There is no particular restriction as to the manner in which the adsorbent material and the catalyst are disposed. Therefore, it is possible to dispose, in the exhaust pipe, a material containing both of an adsorbent material and a catalyst, such as the above-mentioned adsorbent-catalyst material or adsorbent-catalyst, or to dispose an adsorbent material and a catalyst obtained by forming, on a monolithic carrier made of a heat-resistant inorganic material, a catalyst layer containing a catalyst component.

The catalyst used in the present system for automobile exhaust gas purification, preferably comprises, as the catalyst component, at least one kind of noble metal selected from Pt, Pd and Rh. The noble metal can be suitably used because they can purify not only HC but also other harmful substances such as CO, NOx and the like, all emitted from automobile engines.

It is also preferred that the noble metal is loaded on a heat-resistant oxide such as $Al_2O_3$, $SiO_2$, $TiO_2$, $ZrO_2$ or the like as in the case of the adsorbent-catalyst material and the resulting catalyst layer is loaded on a monolithic carrier.

In the present system for automobile exhaust gas purification, it is preferred that an adsorbent material or an adsorbent is disposed, in the exhaust pipe of automobile engine, upstream in the flow direction of exhaust gas and at least one catalyst is disposed downstream in the flow direction of exhaust gas. The catalyst disposed downstream in the flow direction of exhaust gas, preferably contains Pt and/or Pd both having a high HC oxidation capability, particularly preferably Pd superior in low-temperature light-off property. In a preferred example, only a catalyst layer containing 40 to 250 $g/ft^3$ of Pd is formed on a monolithic carrier.

It is also preferred that an adsorbent material or an adsorbent is disposed downstream in the flow direction of exhaust gas and at least one catalyst is disposed upstream in the flow direction of exhaust gas.

The catalyst disposed upstream in the flow direction of exhaust gas, preferably contains Pd having an excellent low-temperature light-off property. Loading of Pd at a relatively high concentration of 40 to 250 $g/ft^3$ is very effective.

In the present system for automobile exhaust gas purification, it is also preferred that at least one electrical heater (hereinafter referred to as "EH") is disposed in the exhaust pipe of automobile engine in order to achieve the early activation of the catalyst.

The EH is preferably constituted by a honeycomb structure made of a heat-resistant metal (e.g. ferrite) and electrodes attached to the honeycomb structure for electrification thereof, in view of the pressure loss and heat-resistance. This EH is preferably used in the form of an electrically heated catalyst (hereinafter referred to as "EHC") which comprises the EH and a catalyst layer formed thereon, made of a noble metal-containing heat-resistant inorganic oxide, because, with the EHC, the electricity required for heating of EH can be reduced owing to the heat of reaction on catalyst.

In one preferred embodiment of the present system for automobile exhaust gas purification, the EHC is disposed downstream of the adsorbent to promote the purification of desorbed HC. When the EHC is small-sized, it is preferred to dispose the catalyst downstream of the EHC but close thereto to effectively utilize the electrically generated heat and heat of reaction on the EHC.

The present system for automobile exhaust gas purification is effective when used as a system of so-called "bypass type" and also when used as a system of so-called "in-line type". The bypass type is one in which an adsorbent material and a catalyst are disposed in the bypass attached to the main exhaust pipe of automobile engine, and the in-line type is one in which an adsorbent material and a catalyst are disposed in the single exhaust pipe of automobile engine having no bypass. However, the in-line type is particularly effective in view of the necessity of the effective purification by catalyst for HC desorbed from adsorbent material and the disposition of adsorbent material and catalyst.

In a method for automobile exhaust gas purification which comprises allowing an adsorbent material to adsorb the hydrocarbons present in the exhaust gas generated during the cold start of an automobile engine, allowing the adsorbent material to desorb the adsorbed hydrocarbons, with its temperature increase caused by the exhaust gas, and allowing a catalyst to purify the desorbed hydrocarbons, hydrocarbons having four or less carbon atoms and/or hydrocarbons having five or more carbon atoms can be purified by the use of the present system for automobile exhaust gas purification.

In conducting the above method for automobile exhaust gas purification using the present system for automobile exhaust gas purification, when, for a certain period during the cold start, an oxidizing gas (e.g. secondary air) is introduced into the exhaust gas from upstream of the catalyst or the ratio of the amount of air for combustion and the amount of fuel is changed by a change of engine operational mode so that the oxygen amount in exhaust gas increases, the combustion reaction on catalyst is promoted and the early light-off of catalyst is achieved.

The above introduction of oxidizing gas or the above change of the ratio of the amount of air for combustion and the amount of fuel, both for increased oxygen supply is preferred because as the HC adsorbed on the adsorbent material begins to be desorbed with the temperature rise of the adsorbent material caused by the heat of exhaust gas, the HC concentration in exhaust gas increases and the oxygen required for purification (combustion) of HC becomes short.

The present invention is described in more detail below by way of Examples. However, the present invention is in no way restricted to these Examples.

[1. Production of various zeolite powders]

Various zeolite powders for use in adsorbent materials were produced.

(1) Ferrierites (3 kinds)

A commercial Na/ferrierite ($SiO_2/Al_2O_3$ ratio = 18) was subjected to ion exchange with $NH_4OH$. The ion-exchanged ferrierite was calcined in air at 550°C for 1 hour to obtain an H/ferrierite ($SiO_2/Al_2O_3$ ratio = 18).

The H/ferrierite was heat treated in the presence of steam at 800°C for 5 hours and then subjected to boiling in 1 N HCl. This operation was repeated to obtain H/ferrierites each having a desired $SiO_2/Al_2O_3$ ratio as shown in Table 1.

(2) Erionites (2 kinds)

Desired amounts of fumed silica ($SiO_2$ = >99.9 wt. %), NaOH, $Al(NO_3)_3.9H_2O$, NaCl, benzyltrimethylammonium and water were mixed to prepare a raw material gel. The gel was placed in a Teflon container. The container was placed in an autoclave and heated to 100°C in 1 hour at an autogenous pressure, then kept at 100°C for 14 days, and allowed to cool.

The resulting material was subjected to ion exchange with $NH_4OH$ and calcined in air to obtain an H/erionite ($SiO_2/Al_2O_3$ ratio = 13).

The H/erionite was heat treated in the presence of steam at 800°C for 15 hours and then subjected to boiling in 1 N HCl. This operation was repeated to obtain H/erionites each having a desired $SiO_2/Al_2O_3$ ratio as shown in Table 1.

(3) Deca-dodecasil 3R

It was synthesized according to the process described in a literature ["Separation of Permanent Gases on the All-Silica 8-Ring Clathrasil DD3R" M.J. den Exter, J.C. Jansen and H. van Bekkum, Studies in Surface Science and Catalysis, 84, 1159 (1994)].

That is, tetramethoxysilane (TMOS), NaOH, 1-adamantaneamine (ADA) and ethylenediamine (EN) were mixed to prepare a mixture for synthesis having a ratio of $100SiO_2:47ADA:4OEN:-11240H_2O$. Specifically, adamantaneamine was dissolved in ethylenediamine; thereto was added water; the resulting mixture was shaken for 1 hour; the resulting material was stirred at 95°C for 1 hour and allowed to cool to 0°C.

Thereto was dropwise added TMOS maintained at 0°C, with stirring. The resulting mixture was stirred at 95°C until it became a transparent solution. The solution was placed in a tetlon container. The container was placed in an autoclave and kept at 160°C for 25 days at an autogenous pressure, then allowed to cool, washed with water three times, and calcined in air to obtain all-silica deca-dodecasil 3R.

This synthetic powder had a $SiO_2/Al_2O_3$ ratio of 2310 owing to the presence of Al (an impurity).

(4) SAPO-34

Colloidal silica (30% by weight), aluminum isopropoxide $[Al(OC_3H_7)_3]$, 85% orthophosphoric acid ($H_3PO_4$), tetraethylammonium hydroxide (TEAOH) and water were mixed according to the procedure mentioned below, to obtain a mixture for synthesis having a ratio of $(TEA)_2O:Al_2O_3:0.6SiO_2:-P_2O_5:50H_2O$.

First, 85% orthophosphoric acid was mixed with a mixture of aluminum isopropoxide $[Al(OC_3H_7)_3]$ and water, with stirring. Thereto was added colloidal silica, and the resulting mixture was stirred until it became homogeneous. Thereto was added an aqueous solution of tetraethylammonium hydroxide (TEAOH), and the resulting mixture was stirred until it becomes homogeneous. The thus-obtained mixture was placed in a Teflon container, and the container was placed in an autoclave and kept at 200°C for 48 hours at an autogenous pressure, then allowed to cool, washed with water three times, and calcined in air to obtain SAPO-34.

(5) Faujasite (2 kinds), beta (2 kinds) and ZSM-5 (2 kinds)

Each two kinds of powders of faujasite, beta and ZSM-5, each having a desired $SiO_2/Al_2O_3$ ratio were selected from their commercial products and used.

Table 1

| Kind Of Adsorbent Material | Number of atoms of oxygen ring | Pore diameter (Å) | $SiO_2/Al_2O_3$ ratio |
|---|---|---|---|
| FER-18 | 10-Membered Ring/8-Membered Ring | $4.2 \times 5.4 / 3.5 \times 4.8$ | 18 |
| FER-81 | 10-Membered Ring/8-Membered Ring | $4.2 \times 5.4 / 3.5 \times 4.8$ | 81 |
| FER-153 | 10-Membered Ring/8-Membered Ring | $4.2 \times 5.4 / 3.5 \times 4.8$ | 153 |
| ERI-13 | 8-Membered Ring | $3.6 \times 5.1$ | 13 |
| ERI-122 | 8-Membered Ring | $3.6 \times 5.1$ | 22 |
| DDR-2310 | 8-Membered Ring | $3.6 \times 4.4$ | 2310 |

Table 1   (continued)

| Kind Of Adsorbent Material | Number of atoms of oxygen ring | Pore diameter (Å) | $SiO_2/Al_2O_3$ ratio |
|---|---|---|---|
| SAPO-34 | 8-Membered Ring | $3.8 \times 3.8$ | - |
| FAU-80 | 12-Membered Ring | $7.4 \times 7.4$ | 80 |
| FAU-219 | 12-Membered Ring | $7.4 \times 7.4$ | 219 |
| BEA-110 | 12-Membered Ring/12-Membered Ring | $7.6 \times 6.4/5.5 \times 5.5$ | 110 |
| BEA-286 | 12-Membered Ring/12-Membered Ring | $7.6 \times 6.4/5.5 \times 5.5$ | 286 |
| MFI-138 | 10-Membered Ring/10-Membered Ring | $5.3 \times 5.6/5.1 \times 5.5$ | 138 |
| MFI-283 | 10-Membered Ring/10-Membered Ring | $5.3 \times 5.6/5.1 \times 5.5$ | 283 |

1. FER refers to ferrierite; ERI refers to erionite;
DDR refers to deca-dodecasil 3R; FAU refers to faujasite;
BEA refers to beta; and MFI refers to ZSM-5.
2. FER, BEA and MFI each have two kinds of pores.

[2. Evaluation of adsorbent materials using respective small samples]

(1) Production of small samples for testing

To each of the zeolite powders shown in Table 1 were added an alumina sol having an alumina content of 2.5% by weight and water. Each resulting mixture was subjected to wet grinding for 20 hours by the use of a ball mill to obtain a slurry to be loaded.

In the slurry was dipped a cordierite honeycomb carrier manufactured by NGK insulators, Ltd. [square cells, cell density = 400 cells/in.$^2$ (62 cells/cm$^2$), rib thickness = 6 mil (152 $\mu$m), honeycomb size = 1 in. (diameter) x 2 in. (length), honeycomb capacity =26 cc] so that the loaded zeolite amount became 0.16 g per cc of honeycomb carrier. The slurry-loaded honeycomb carrier was dried and then calcined in air at 550°C for 1 hour to obtain various small samples for testing.

(2) Durability test for small samples

In order to evaluate the durability, part of each small sample obtained above was subjected to a durability test of 850°C x 4 hours in a humid atmosphere containing 10% by volume of steam ($H_2O$).

(3) HC adsorption capability test for small samples

Each small sample obtained above was measured for adsorption efficiency for toluene and propylene selected as representative hydrocarbons.

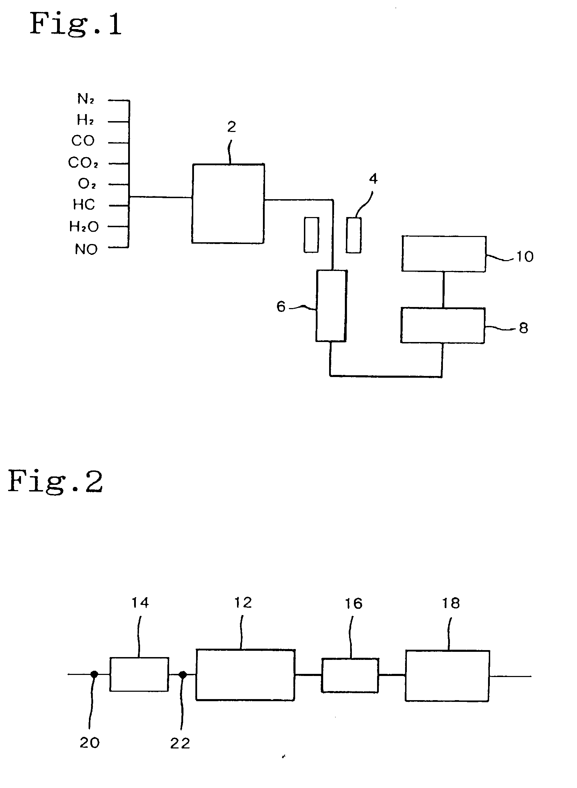

In the measurement, a test apparatus shown in Fig. 1 was used. As a test gas, there was used a model gas which simulated an exhaust gas emitted from a commercial engine during the cold start and which had a composition composed of Toluene = 643ppm or Propylene = 1500 ppm, $CO_2$ = 16%, $O_2$ = 0.77%, CO = 2%, $H_2$ = 0.33%, $H_2O$ = 10%, NO = 1,500 ppm, and $N_2$ = remainder ($H_2O$ was absent in some cases). The model gas was passed through each small sample (adsorbent material), and the amount of HC discharged from the adsorbent material was measured for 150 seconds.

The HC adsorption efficiency of each small sample was calculated using the following formula (2):

$$\text{adsorption efficiency (\%)} = [(B-A)/B]\text{x}100 \qquad (2)$$

wherein A is the amount of HC discharged when a zeolite-loaded honeycomb carrier (adsorbent material) was used, and B is the amount of HC discharged when a zeolite-unloaded honeycomb carrier was used.

The results obtained are shown in Table 2. Incidentally, the measurement of adsorption efficiency was conducted by controlling the inlet gas inlet temperature of small sample, at 80°C.

(4) Results

As shown in Table 2, ferrierites, erionites, deca-dodecasil 3R and SAPO-34 were unable to adsorb toluene having a large molecular diameter, but could adsorb propylene even after the 850°C durability test and even in the presence of water vapor.

Table 2

| | Unaged samples | | | | 850°C aged samples | | | |
|---|---|---|---|---|---|---|---|---|
| | Propylene adsorption efficiency (%) | | Toluene adsorption efficiency (%) | | Propylene adsorption efficiency (%) | | Toluene adsorption efficiency (%) | |
| | Water | | Water | | Water | | Water | |
| | Present | Absent | Present | Absent | Present | Absent | Present | Absent |
| FER-18 | 17 | 38 | 1 | 3 | 15 | 25 | 2 | 3 |
| FER-81 | 29 | 40 | 2 | 4 | 28 | 35 | 3 | 4 |
| FER-153 | 39 | 45 | 1 | 2 | 35 | 43 | 1 | 2 |
| ERI-13 | 21 | 41 | 1 | 2 | 18 | 23 | 2 | 1 |
| ERI-122 | 40 | 51 | 2 | 3 | 35 | 48 | 3 | 0 |
| DDR-2310 | 53 | 60 | 0 | 1 | 54 | 59 | 2 | 3 |
| SAPO-34 | 30 | 60 | 1 | 2 | 25 | 40 | 3 | 4 |
| FAU-80 | 4 | 65 | 60 | 82 | 5 | 7 | 50 | 71 |
| FAU-219 | 4 | 58 | 62 | 79 | 1 | 3 | 56 | 72 |
| BEA-110 | 3 | 78 | 92 | 94 | 2 | 4 | 92 | 93 |
| BEA-286 | 2 | 65 | 93 | 93 | 6 | 8 | 91 | 94 |
| MFI-138 | 5 | 75 | 72 | 80 | 2 | 5 | 68 | 71 |
| MFE-283 | 3 | 63 | 85 | 90 | 3 | 4 | 83 | 92 |
| FER refers to ferrierite; ERI refers to eriorite; DDR refers to deca-dodecasil 3R; FAU refers to faujasite; BEA refers to beta; and MFI refers to ZSM-5. | | | | | | | | |

[3. Evaluation using purification systems]

(1) Production of adsorbents

To each of the zeolite powders shown in Table 1 were added an alumina sol having an alumina content of 2.5% by weight and water. Each resulting mixture was subjected to wet grinding for 20 hours by the use of a ball mill to obtain a slurry to be loaded.

In each case of adsorbents 1 and 2 wherein two kinds of zeolites were loaded on a cordierite honeycomb carrier (described later) in a mixed state, there was used, as a slurry to be loaded, a mixed slurry containing said two kinds of zeolites in a desired proportion. (This matter applies also in production of adsorbent-catalysts 1 to 3 and adsorbents 9 to 14.)

In the above-obtained slurry was dipped a cordierite honeycomb carrier (a product of NGK insulators, Ltd.) described in Table 3 to load a desired amount(s) of a zeolite(s) on the carrier.

The slurry-loaded honeycomb carrier was dried and then calcined in air at 550°C for 1 hour to obtain adsorbents 1 to 3 shown in Table 3.

(2) Production of adsorbent-catalysts

Various adsorbents were produced in the same manner as for the above-mentioned adsorbents. On each of the adsorbents was loaded a catalyst component according to the following procedure to produce adsorbent-catalysts 1 to 7 and 9 to 14 each having a first layer (an inner layer) having a HC adsorption capability and a second layer [an outer (surface) layer] having a three-way catalytic property. Incidentally, the adsorbent-catalysts 6 and 7 were each obtained by producing two kinds of adsorbent-catalysts each containing a zeolite of different pore diameter and combining them into one adsorbent-catalyst.

First, cerium acetate [Ce(CH$_3$COO)$_3$] and cerium oxide (CeO$_2$) were added to a commercial $\gamma$-Al$_2$O$_3$ having a specific surface area of 200 m$^2$/g, in an amount of 30% by weight in terms of oxide. The resulting mixture was subjected to wet grinding, dried and calcined at 550°C to obtain a $\gamma$-Al$_2$O$_3$/CeO$_2$ compound oxide. The compound oxide was impregnated with Pd by the use of an aqueous $(NH_4)_3PdCl_2$ solution. The Pd-impregnated compound oxide was dried and then calcined at 500°C to obtain a Pd-loaded $Al_2O_3/CeO_2$ compound oxide (a catalyst component).

To the Pd-loaded $Al_2O_3/CeO_2$ compound oxide were added small amounts of water and acetic acid ($CH_3COOH$) to produce a slurry to be loaded. In this slurry was dipped an adsorbent to load, on the adsorbent, a catalyst component in an amount of 0.10 g per cc of the honeycomb carrier of the adsorbent. The slurry-loaded adsorbent was dried and then calcined at 500°C to obtain adsorbent-catalysts 1 to 7 and 9 to 14 shown in Tables 3 to 5. Incidentally, the total amount of Pd loaded was 100 g per $ft^3$ of the honeycomb.

Table 3

| | Adsorbent | Adsorbent or adsorbent-catalyst | | | | | | HC emission | |
| | | Dimension | Honeycomb carrier | | Adsorbent material | | Catalyst component | During bag-1A (g) | During bag-1 (g) |
| | | Diameter/ length (cm/cm) | Structure | Hole/ hole dia (mm) | Porous material | Loaded amount(s) (g/cc) | | | |
| Example 1 | Adsorbent 1 | 11.8×20 | 10/300 | No/ — | FER-153 BEA-110 | 0.06 0.06 | Absent | 0.869 | 1.034 |
| Example 2 | Adsorbent-catalyst 1 | 11.8×20 | 10/300 | No/ — | DDR-2310 MFI-283 | 0.06 0.10 | Present | 0.698 | 0.740 |
| Example 3 | Adsorbent-catalyst 2 | 11.8×15 | 12/300 | Yes/35 | SAPO-34 BEA-286 | 0.04 0.10 | Present | 0.596 | 0.655 |
| Example 4 | Adsorbent-catalyst 3 | 14.3×15 | 12/300 | Yes/25 | DDR-2310 MFI-283 | 0.06 0.10 | Present | 0.542 | 0.623 |
| Example 5 | Adsorbent 2 | 14.3×10 | 12/300 | Yes/38 | ERI-122 FAU-219 | 0.10 0.07 | Absent | 0.723 | 0.807 |
| Comparative Example 1 | Adsorbent 3 | 14.3×10 | 12/300 | Yes/38 | FAU-219 | 0.07 | Absent | 1.354 | 1.584 |
| Comparative Example 2 | Adsorbent-catalyst 4 | 11.8×20 | 10/300 | No/ — | MFI-283 | 0.10 | Present | 0.997 | 1.057 |
| Comparative Example 3 | Adsorbent-catalyst 5 | 11.8×15 | 12/300 | Yes/35 | BEA-286 | 0.10 | Present | 1.003 | 1.127 |

1. FER refers to ferrierite ; ERI refers to eriorite; DDR refers to deca-dodecasil 3R; FAU refers to faujasite; BEA refers to beta; and MFI referes to ZSM-5.
2. "Structure" of honeycomb carrier refers to partition wall thickness (mil)/cell density (cells/in²).
3. "Hole" of honeycomb carrier refers to flowing-through hole.

EP 0 909 579 A1

EP 0 909 579 A1

Table 4

| | | Adsorbent or adsorbent-catalyst | | | | | | HC emission | |
| | | Dimension | Honeycomb carrier | | Adsorbent material | | Catalyst component | During bag-1A (g) | During bag-1 (g) |
| | Adsorbent | Diameter/ length (cm/cm) | Structure | Hole/ hole dia (mm) | Porous material | Loaded amount(s) (g/cc) | | | |
| Example 6 | Adsorbent-catalyst 6 | 14.3×15 14.3×7.5 14.3×7.5 | 12/300 12/300 12/300 | Yes/25 Yes/25 Yes/25 | MFI-283 DDR-2310 | 0.20 (upstream) 0.12 (downstream) | Present | 0.504 | 0.585 |
| Example 7 | Adsorbent-catalyst 7 | 11.8×15 11.8×10 11.8×5 | 12/300 12/300 12/300 | Yes/35 Yes/35 Yes/35 | BEA-286 DDR-2310 | 0.15 (upstream) 0.10 (downstream) | Present | 0.518 | 0.588 |
| Example 8 | Adsorbent-catalyst 8 | 14.3×15 | 12/300 | Yes/25 | DDR-2310 MFI-283 | 0.06 (inner) 0.09 (outer) | Present | 0.520 | 0.586 |

1. DDR refers to deca-dodecasil 3R; BEA refers to beta; and MFI refers to ZSM-5.
2. "Structure" of honeycomb carrier refers to partition wall thickness (mil)/cell density (cells/in²).
3. "Hole" of honeycomb carrier refers to flowing-through hole.
4. Each of "adsorbent-catalysts 6 and 7" was obtained by connecting two adsorbent-catalysts whose adsorbent layers were different in pore diameter, in series to make them into one adsorbent-catalyst. "Upstream" and "downstream" indicate an upstream position and a downstream position, respectively, in exhaust pipe.
5. "Adsorbent-catalyst 8" is a double-layered adsorbent whose adsorbent layer consisted of two adsorbent layers different in pore diameter and formed in an overlapping state. "Inner" and "outer" indicates an inner layer cued an outer layer, respectively.

14

Table 5

| | Test vehicle | Weight ratio of hydrocarbons in exhaust gas $D/C$ (g/g) | Adsorbent-catalyst | | | | Relation of hydrocarbon weight ratio and porous material weight ratio $(A/B) \times (D/C)$ | HC emission | |
|---|---|---|---|---|---|---|---|---|---|
| | | | Adsorbent | Adsorbent material | | Weigh ratio of porous materials $A/B$ (g/g) | | During bag-1A (g) | During bag-1 (g) |
| | | | | Porous material | Loaded amount (s) (g/cc) | | | | |
| Example 9 | Test vehicle A | 1.07 | Adsorbent-catalyst 9 | DDR-2310 BEA-286 | 0.02 0.14 | 0.14 | 0.15 | 0.743 | 0.801 |
| Example 10 | Test vehicle A | 1.07 | Adsorbent-catalyst 10 | DDR-2310 BEA-286 | 0.06 0.08 | 0.75 | 0.80 | 0.607 | 0.772 |
| Example 11 | Test vehicle A | 1.07 | Adsorbent-catalyst 11 | DDR-2310 BEA-286 | 0.10 0.06 | 1.67 | 1.79 | 0.724 | 0.798 |
| Example 12 | Test vehicle B | 1.56 | Adsorbent-catalyst 12 | DDR-2310 BEA-286 | 0.01 0.15 | 0.07 | 0.11 | 0.784 | 0.897 |
| Example 13 | Test vehicle B | 1.56 | Adsorbent-catalyst 13 | DDR-2310 BEA-286 | 0.06 0.12 | 0.5 | 0.78 | 0.564 | 0.675 |
| Example 14 | Test vehicle B | 1.56 | Adsorbent-catalyst 14 | DDR-2310 BEA-286 | 0.07 0.02 | 3.5 | 5.46 | 0.901 | 0.951 |

1. DDR-2310 is deca-dodecasil 3R and a porous material of 0.3 to 0.5 mm in pore diameter, and BEA-286 is beta and a porous material of larger than 0.5 mm in deameter.
2. Each adsorbent-catalyst hod a dimension of 11.8 cm (diameter) and 15 cm (length); used a honeycomb carrier of 10 mil (partition wall thickness) and 300 cells/in² (cell density) containing a flowing-through hole and contained a catalyst.
3. A refere to a weight (g) of DDR-2310; B refere to a weight (g) of BEA-286; C refere to a weight (g) C40, less HC generated during cold start; and D is a weight (g) of C5 or more HC generated during cold start.

EP 0 909 579 A1

(3) Production of double-layered adsorbent-catalyst

To each of the DDR-2310 powder and the MFI-283 powder both shown in Table 1 were added water and an alumina sol having an alumina solid content of 2.5% by weight. Each resulting mixture was subjected to wet grinding for 20 hours by the use of a ball mill to prepare two kinds of slurries to be loaded.

Then, a cordierite honeycomb (a product of NGK Insulators, ltd.) mentioned in Table 4 was dipped in the slurry containing DDR-2310 to load a desired amount of the slurry on the honeycomb. The slurry-loaded honeycomb was dried and then calcined in air at 550°C for 1 hour. The calcined material was dipped in the slurry containing MFI-283 to load a desired amount of the slurry on the calcined material. The resulting material was dried and then calcined in air at 550°C for 1 hour to obtain a double-layered adsorbent wherein two kinds of zeolites different in pore diameter were loaded on the honeycomb in an overlapping state.

The double-layered adsorbent was dipped in a slurry for catalyst loading, in the same manner as mentioned above, to obtain an adsorbent-catalyst 8 containing, in the surface layer, a catalyst component in an amount of 0.10 g per cc of the honeycomb.

(4) Production of catalysts

A commercial $\gamma$-$Al_2O_3$ having a specific surface area of 200 $m^2/g$ was impregnated with Pd or Rh by the use of an aqueous $(NH_4)_3PdCl_2$ or $Rh(NO_3)_3$ solution. The resulting material was dried and then calcined at 500°C to obtain a Pd-loaded $Al_2O_3$ powder and a Rh-loaded $Al_2O_3$ powder.

To each of the two kinds of noble metal-loaded $Al_2O_3$ powders were added appropriate amounts of water and acetic acid ($CH_3COOH$). To the resulting mixture containing the Pd-loaded $Al_2O_3$ powder was further added 80% by weight of a $CeO_2$ powder. Each of the resulting mixtures was subjected to wet grinding to obtain two kinds of slurries to be loaded. Of the two kinds of slurries, the Pd-$Al_2O_3$/$CeO_2$ slurry was loaded on a cordierite honeycomb manufactured by NGK Insulators, Ltd. (diameter = 3.66 in., volume = 0.6 $\ell$, rib thickness = 6 mil, cell density = 400 cells/in.$^2$) in an amount of 0.10 g per cc of honeycomb. The resulting material was calcined at 500°C to obtain a catalyst A (a Pd catalyst).

The Pd-$Al_2O_3$/$CeO_2$ slurry was loaded on the same cordierite honeycomb as used above, in the same manner as in the case of the catalyst A. Successively, thereon was loaded the Rh-$Al_2O_3$ slurry. The resulting material was calcined at 500°C to obtain a double-layered catalyst B (a Pd-Rh catalyst).

Further, a double-layered catalyst C (a Pt-Rh catalyst) was obtained in the same manner as in the case of the catalyst B, except that a Pt-$Al_2O_3$/$CeO_2$ slurry prepared by using an aqueous $H_2PtCl_2$ solution in place of the aqueous $(NH_4)_3PdCl_2$ solution was first loaded on a honeycomb and that there was used a cordierite honeycomb manufactured by NGK Insulators, Ltd. (diameter = 4.66 in., volume = 2.0 $\ell$, rib thickness = 6 mil, cell density = 400 cells/in.$^2$).

(5) Aging of adsorbents, etc.

Each of the adsorbents, adsorbent-catalysts (including double-layered adsorbent-catalyst, the same applies hereinafter) and catalysts produced above was disposed in the exhaust pipe of a commercial engine at such an exhaust pipe site as the exhaust gas temperature at the inlet of each adsorbent, adsorbent-catalyst or catalyst became 850°C. Then, the engine was operated for total 100 hours in a fuel-cut mode to subject the adsorbent, adsorbent-catalyst or catalyst to aging. The fuel-cut mode was such that the engine was operated for 60 seconds in the vicinity of a stoichiometric point (A/F = 14.4) and then fuel supply was cut for 5 seconds to shift the exhaust gas to a fuel-lean side.

(6) Measurement of HC emission when using no exhaust gas purification system

Before conducting, in the following item (7), the evaluation of exhaust gas purification systems of Examples 1 to 14 and Comparative Examples 1 to 3 using a test vehicle (vehicle A) having a L4 type engine of 2,000 cc displacement and a test vehicle (vehicle B) having a V6 type engine of 3,800 cc displacement, there were measured, for each of the test vehicles, the amount of HC emitted from the engine during the 140 seconds from the start of engine, the HC emitted during Bag-1, and the proportions of HC of C4 or less and HC of C5 or more, of the amount of HC emitted during the 140 seconds, when the engine was operated in accordance with the LA-4 mode of FTP.

Incidentally, in this measurement was disposed, in each engine exhaust pipe, a cordierite honeycomb (diameter = 118 mm, length = 200 mm) having neither zeolite nor catalyst loaded thereon, in order to allow the pressure loss seen during the measurement, to resemble to those appearing when the systems of Examples 1 to 14 and Comparative Examples 1 to 3 were used.

The results are shown in Table 6. The ratio of the emission of HC of C5 or more and the emission of C4 or less was different depending upon the test vehicles, and was 1.07 in test vehicle A and 1.56 in test vehicle B.

# EP 0 909 579 A1

Table 6

| Test vehicle | | | HC emission (g) | | | |
| --- | --- | --- | --- | --- | --- | --- |
| | Model year | Displacement (cc) | During 140 seconds from engine start | | | During bag-1 |
| | | | C4 or less | C5 or more | Total | |
| Test vehicle A | 1988 | 2,000 | 1.4 | 1.5 | 2.9 | 6.9 |
| Test vehicle B | 1995 | 3,800 | 0.9 | 1.4 | 2.3 | 6.7 |

(7) Evaluation of systems for automobile exhaust gas purification

In the exhaust pipe of test vehicle A or test vehicle B were disposed the catalyst B (14), an adsorbent or adsorbent-catalyst (12), the catalyst A (16) and the catalyst C (18) in this order, starting from an exhaust pipe point distant from the exhaust manifold of engine by 600 mm (test vehicle A) or 1,000 mm (test vehicle B), as shown in Fig. 2, whereby systems for automobile exhaust gas purification of Examples 1-14 and Comparative Examples 1-3 were constituted.

As the adsorbent or adsorbent-catalyst (12), there was used one of the adsorbents 1 to 3 and adsorbent-catalysts 1 to 14 shown in Tables 3 to 5.

Each of the adsorbent-catalysts of Examples 6 and 7 was disposed in the exhaust pipe in such a manner that the zeolite (MFI-283 or BEA-286) of larger than 0.5 nm in pore diameter was positioned upstream and the zeolite (DDR-2310) of 0.3 to 0.5 nm in pore diameter was positioned downstream.

All of the adsorbents, adsorbent-catalysts and catalysts used had been subjected to aging as mentioned previously. Secondary air inlets (20) and (22) were formed at the exhaust pipe points of 100 mm upstream of the catalyst B (14) and downstream of the catalyst B (14), respectively. Using an air pump, secondary air was introduced from the secondary air inlet (20) at a rate of 80 ℓ/min for 70 seconds from the start of engine and from the secondary air inlet (22) at a rate of 50 ℓ/min for 180 seconds from a timing when 70 seconds had passed from the engine start. In this state, a test according to the LA-4 mode of FTP of U.S. was conducted.

The HC emissions obtained in each system during the Bag-IA of FTP (cold transient period, 140 seconds from engine start) and during the Bag-1 of FTP (cold transient period, 505 seconds from engine start) are shown in Tables 3 to 5.

Incidentally, in Examples 1 to 8 and Comparative Examples 1 to 3 shown in Tables 3 and 4, test vehicle A was used; in each of Examples 9 to 14 shown in Table 5, test vehicle A and test vehicle B were used in order to examine the relation between the weight ratio of porous material (A) of 0.3 to 0.5 nm in pore diameter and porous material (B) of larger than 0.5 nm in pore diameter and the composition of exhaust gas right after engine cold start.

As a result, as shown in Tables 3 and 4, the adsorbents and adsorbent-catalysts each containing at least a porous material of 0.3 to 0.5 nm in pore diameter gave low HC emissions. As shown in Table 5, the exhaust gas purification systems each using an adsorbent-catalyst having a ratio of (1) the weight ratio of C5 or more HC emission and C4 or less HC emission and (2) the weight ratio of porous material of 0.3 to 0.5 nm in pore diameter and porous material of larger than 0.5 nm, of 0.5 to 3, showed good HC emissions as compared with the exhaust gas purification systems having said ratio outside the above range.

As described above, of the harmful substances contained in the exhaust gas emitted from an automobile engine, the HC emitted in a large amount during the cold start, particularly the HC of C4 or less can be effectively purified according to the present invention.

## Claims

1. An adsorbent material for automobile exhaust gas purification, comprising at least one kind of porous material having a large number of pores and a hydrocarbon adsorption capability, wherein the porous material comprises at least a porous material having pores of 0.3 to 0.5 nm in diameter.

2. An adsorbent material for automobile exhaust gas purification, comprising at least two kinds of porous materials each having a large number of pores and a hydrocarbon adsorption capability, wherein the porous materials comprise at least a porous material having pores of 0.3 to 0.5 nm in diameter and a porous material having pores of larger than 0.5 nm in diameter.

3. An adsorbent material according to Claim 2, wherein (a) the weight ratio (Ma/Mb) of the weight [Ma (g)] of the

17

porous material having pores of 0.3 to 0.5 nm in diameter and the weight [Mb (g)] of the porous material having pores of larger than 0.5 nm in diameter and (b) the weight ratio (Md/Mc) of the weight [Md (g)] of hydrocarbons having five or more carbon atoms and the weight [Mc (g)] of hydrocarbons having four or less carbon atoms, all the hydrocarbons being present in the exhaust gas generated during the cold start of an automobile engine, satisfy the following formula (1):

$$0.5 \leq (Ma/Mb) \times (Md/Mc) \leq 3 \qquad\qquad (1)$$

4.  An adsorbent material according to any of Claims 1 to 3, wherein the porous material(s) is (are) a zeolite(s).

5.  An adsorbent material according to Claim 4, wherein each zeolite is a silicate, an aluminosilicate or an aluminophosphate.

6.  An adsorbent material according to Claim 5, wherein the aluminosilicate has a $SiO_2/Al_2O_3$ ratio of 10 or more.

7.  An adsorbent material according to Claim 5, wherein the aluminosilicate has a $SiO_2/Al_2O_3$ ratio of 50 or more.

8.  An adsorbent material according to Claim 5, wherein the aluminosilicate has a $SiO_2/Al_2O_3$ ratio of 100 or more.

9.  An adsorbent material according to any of Claims 4 to 8, wherein each zeolite has pores determined by 8-membered ring.

10. An adsorbent material according to any of Claims 4 to 9, wherein each zeolite has a pore structure of chabazite type, deca-dodecasil 3R type, ferrierite type, erionite type or phillipsite type.

11. An adsorbent material according to any of Claims 4 to 10, wherein a noble metal is loaded on each zeolite.

12. An adsorbent material according to Claim 11, wherein the noble metal is at least one kind of noble metal selected from Pt, Pd and Rh.

13. An adsorbent material according to Claim 11 or 12, wherein the amount of the noble metal loaded is 5 to 150 g/ft$^3$.

14. An adsorbent material according to any of Claims 4 to 13, wherein each zeolite contains at least one kind of ion selected from the ions of the group IB elements, i.e. Cu, Ag and Au.

15. An adsorbent for automobile exhaust gas purification, comprising:

    a carrier, and
    an adsorbent layer containing an adsorbent material according to any of Claims 1 to 14, formed on the carrier.

16. An adsorbent according to Claim 15, wherein the carrier is a monolithic carrier made of a heat-resistant inorganic material.

17. An adsorbent according to Claim 15 or 16, wherein an adsorbent layer containing a porous material having pores of 0.3 to 0.5 nm in diameter and an adsorbent layer containing a porous material having pores of larger than 0.5 nm in diameter are formed on the carrier in an overlapping state.

18. An adsorbent according to Claim 17, wherein the adsorbent layer containing a porous material having pores of 0.3 to 0.5 nm in diameter is formed on the carrier and, on the adsorbent layer, is formed the adsorbent layer containing a porous material having pores of larger than 0.5 nm in diameter.

19. An adsorbent according to Claim 15 or 16, wherein an adsorbent layer containing a porous material having pores of 0.3 to 0.5 nm in diameter and an adsorbent layer containing a porous material having pores of larger than 0.5 nm in diameter are formed on the carrier in a divided state.

20. An adsorbent according to any of Claims 16 to 19, wherein in the monolithic carrier is formed a blowing-through hole having a diameter larger than the diameters of the passages of the monolithic carrier.

21. An adsorbent according to Claim 20, wherein the diameter of the blowing-through hole is 10 to 50 mm.

22. An adsorbent according to any of Claims 15 to 21, wherein a catalyst layer containing a catalyst component is formed on the adsorbent layer.

23. An adsorbent according to Claim 22, wherein the catalyst component comprises at least one kind of noble metal selected from Pt, Pd and Rh.

24. An adsorbent according to Claim 23, wherein the noble metal is loaded in an amount of 5 to 150 g/ft$^3$.

25. An adsorbent according to Claim 23 or 24, wherein the noble metal is loaded on a heat-resistant oxide and, in that state, is contained in the catalyst layer.

26. A system for automobile exhaust gas purification disposed in the exhaust pipe of an automobile engine, which comprises at least:

an adsorbent material having a hydrocarbon adsorption capability, and
a catalyst capable of purifying the hydrocarbons present in the exhaust gas emitted from the engine, in which system the adsorbent material is an adsorbent material set forth in any of Claims 1 to 14 or an adsorbent set forth in any of Claims 15 to 25.

27. A system for automobile exhaust gas purification according to Claim 26, wherein the catalyst contains, as the catalyst component, at least one kind of noble metal selected from Pt, Pd and Rh.

28. A system for automobile exhaust gas purification according to Claim 26 or 27, wherein the catalyst comprises:

a monolithic carrier made of a heat-resistant inorganic material, and
a catalyst layer containing a catalyst component, formed on the carrier.

29. A system for automobile exhaust gas purification according to Claim 28, wherein the adsorbent material or the adsorbent is provided in an exhaust pipe at a position downstream in the flow direction of the exhaust gas and the catalyst of at least one kind is provided in an exhaust pipe at a position upstream in the flow direction of the exhaust gas.

30. A system for automobile exhaust gas purification according to any of Claims 26 to 29, wherein when the adsorbent is an adsorbent comprising a carrier, an adsorbent layer containing a porous material having pores of 0.3 to 0.5 nm in diameter and an adsorbent layer containing a porous material having pores of larger than 0.5 nm in diameter, the two adsorbent layers being formed on the carrier in a divided state, the latter adsorbent layer is positioned on the carrier upstream in the flow direction of the exhaust gas and the former adsorbent layer is positioned on the carrier downstream in the flow direction of the exhaust gas.

31. A system for automobile exhaust gas purification according to any of Claims 26 to 30, wherein at least one electrical heater is provided in the exhaust pipe.

32. A system for automobile exhaust gas purification according to any of Claims 26 to 31, wherein the exhaust pipe is constituted as a single exhaust pipe having no bypass.

33. A method for automobile exhaust gas purification which comprises allowing an adsorbent material to adsorb the hydrocarbons present in the exhaust gas generated during the cold start of an automobile engine, allowing the adsorbent material to desorb the adsorbed hydrocarbons, with its temperature increase caused by the exhaust gas, and allowing a catalyst to purify the desorbed hydrocarbons, in which method hydrocarbons having four or less carbon atoms and/or hydrocarbons having five or more carbon atoms are purified by the use of a system for automobile exhaust gas purification set forth in any of Claims 26 to 32.

34. A system for automobile exhaust gas purification according to Claim 33, wherein the oxygen content in the exhaust gas is increased by introducing an oxidizing gas into the exhaust gas, or by controlling the ratio of the amount of air for fuel combustion and the amount of fuel during the operation of the automobile engine.

# Fig.1

N₂
H₂
CO
CO₂
O₂
HC
H₂O
NO

2

4

6

8

10

# Fig.2

14    12    16    18

20    22

## EUROPEAN SEARCH REPORT

**European Patent Office**

**Application Number**

EP 98 30 8386

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 716 877 A (JOHNSON MATTHEY PLC) 19 June 1996 | 1,2, 4-10, 15-19, 22-28, 30,32,33 | B01D53/94 |
| Y | * page 3, line 5 - page 5, line 34 * | 11-14, 20,21, 31,34 | |
| Y | EP 0 661 098 A (NGK INSULATORS LTD) 5 July 1995 <br><br> * the whole document * | 11-14, 20,21, 31,34 | |
| X | EP 0 593 904 A (CORNING INC) 27 April 1994 <br><br><br> * page 3, line 41 - line 48 * <br> * page 6, line 1 - line 30; figure 1 * | 1,4-10, 15,16, 26-29, 32,33 | |
| A | PATENT ABSTRACTS OF JAPAN vol. 095, no. 009, 31 October 1995 & JP 07 155613 A (NISSAN MOTOR CO LTD), 20 June 1995 * abstract * & DATABASE WPI Section Ch, Week 9533 Derwent Publications Ltd., London, GB; Class E19, AN 95-250900 & JP 07 155613 A (NISSAN MOTOR CO LTD) , 20 June 1995 * abstract * <br><br> -/-- | 1,2,15, 26,33 | **TECHNICAL FIELDS SEARCHED (Int.Cl.6)** <br> B01D |

The present search report has been drawn up for all claims

| Place of search | Date of completion of the search | Examiner |
|---|---|---|
| THE HAGUE | 12 January 1999 | Borello, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 98 30 8386

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN<br>vol. 095, no. 008, 29 September 1995<br>& JP 07 124467 A (NISSAN MOTOR CO LTD),<br>16 May 1995<br>* abstract *<br>& DATABASE WPI<br>Section Ch, Week 9528<br>Derwent Publications Ltd., London, GB;<br>Class E19, AN 95-211813<br>& JP 07 124467 A (NISSAN MOTOR CO LTD)<br>* abstract *<br>----- | 1,2,15,<br>26,33 | |

TECHNICAL FIELDS
SEARCHED (Int.Cl.6)

The present search report has been drawn up for all claims

| Place of search | Date of completion of the search | Examiner |
|---|---|---|
| THE HAGUE | 12 January 1999 | Borello, E |

EPO FORM 1503 03.82 (P04C01)

**ANNEX TO THE EUROPEAN SEARCH REPORT
ON EUROPEAN PATENT APPLICATION NO.**                    EP 98 30 8386

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-1999

| Patent document cited in search report | | Publication date | Patent family member(s) | | Publication date |
|---|---|---|---|---|---|
| EP 0716877 | A | 19-06-1996 | JP | 8224449 A | 03-09-1996 |
| | | | ZA | 9510135 A | 05-06-1996 |
| EP 0661098 | A | 05-07-1995 | JP | 7232084 A | 05-09-1995 |
| | | | CA | 2139089 A,C | 29-06-1995 |
| | | | EP | 0820810 A | 28-01-1995 |
| | | | US | 5538697 A | 23-07-1996 |
| EP 0593904 | A | 27-04-1994 | AU | 4894193 A | 05-05-1994 |
| | | | BR | 9304231 A | 10-05-1994 |
| | | | CA | 2100935 A | 21-04-1994 |
| | | | JP | 6200744 A | 19-07-1994 |
| | | | MX | 9306475 A | 29-04-1994 |

EPO FORM P0459

For more details about this annex : see Official Journal of the European Patent Office, No. 12/82